# FASCICULE DE BREVET EUROPEEN

(11) **EP 2 213 963 B1**
(45) Date de publication et mention de la délivrance du brevet: **03.11.2021**
(21) Numéro de dépôt: 10152027.8
(22) Date de dépôt: 28.01.2010
(51) Int. Cl.: F25B 37/00, F25B 39/02, F25B 15/06

(54) **Dispositif de climatisation par absorption perfectionne**
Klimagerät mit verbesserter Adsorption
Air-conditioning device with improved absorption

(30) Priorité: 30.01.2009 FR 0950581
(43) Date de publication de la demande: 04.08.2010
(73) Titulaire: PSA Automobiles SA, 78300 Poissy (FR)
(72) Inventeur: Boudard, Emmanuel, 78960 Voisins le Bretonneux (FR); Bruzzo, Vital, 35131 Padova (IT)

(56) Documents cités:
- WO-A1-2007/125220
- WO-A1-2007/125221
- FR-A1- 2 871 221
- None

## Description

La présente invention concerne un dispositif de climatisation par absorption perfectionné.

Elle concerne également un véhicule automobile, équipé d'un tel dispositif de climatisation par absorption perfectionné.

Parmi les dispositifs de climatisation existants, on connaît des dispositifs de climatisation par absorption, reposant sur le principe de l'absorption d'un fluide réfrigérant, sous forme gazeuse, par un fluide absorbant. Contrairement aux dispositifs de climatisation classiques à compression mécanique, ces dispositifs de climatisation à absorption ne comportant pas de compression mécanique ont donc peu de pièces en mouvement, ce qui limite le bruit et les vibrations, simplifie la maintenance, et améliore la fiabilité et la durée de vie du dispositif.

On a déjà cherché à améliorer les performances des dispositifs de climatisation par absorption pour pouvoir les implanter facilement et de façon fiable dans les véhicules. Ainsi, par exemple, le document FR 2 900 723 décrit un tel dispositif de climatisation comportant un ensemble évaporateur/absorbeur composé de plaques poreuses dans lesquelles les fluides sont dispersés, certaines étant parcourues par le fluide réfrigérant à évaporer, en l'occurrence de l'eau, et d'autres par le fluide absorbant, en l'occurrence une solution de Bromure de Lithium.

Des surfaces planes de transfert de gaz, limitant les plaques poreuses, permettent au gaz provenant de l'évaporation du fluide réfrigérant de rentrer en contact avec le fluide absorbant pour être absorbé. Le débit important des fluides circulant dans les plaques poreuses permet d'absorber la chaleur émise par la réaction d'absorption, qui est exothermique.

Le document WO2007125221 correspondant au document FR2900723 et considéré comme l'état de la technique le plus proche décrit un ensemble comprenant un évaporateur de fluide réfrigérant liquide et un absorbeur de fluide réfrigérant gazeux raccordé à l'évaporateur. Dans ce document on divulgue un dispositif de climatisation par absorption notamment pour véhicule automobile, comprenant un évaporateur et un absorbeur présentant chacun au moins une plaque de dispersion parcourue respectivement par un fluide réfrigérant et un fluide absorbant, lesdites plaques de dispersions étant constituées par deux grilles parallèles, la grille constituant la plaque de dispersion parcourue par un fluide absorbant étant constituée de fils entrecroisés formant des mailles, ladite grille possédant les caractéristiques suivantes : la taille de fil est comprise entre 10 et 1000 micromètres, la taille de maille possède des longueurs comprises entre 100 et 1000 micromètres et son matériau est inoxydable. L'ensemble définit une chambre de migration de fluide réfrigérant gazeux délimitée par une surface d'évaporation située sur l'évaporateur, par une surface d'absorption située sur l'absorbeur en regard de la surface d'évaporation, et par un fond reliant lesdites surfaces. L'évaporateur comprend un collecteur de liquide réfrigérant liquide raccordé à la surface d'évaporation pour recueillir le fluide réfrigérant liquide en aval de cette surface. L'évaporateur comprend en outre des moyens de cloisonnement disposés dans la chambre et délimitant sur la surface d'évaporation au moins une région couverte par les moyens de cloisonnement et au moins une région découverte d'évaporation. Le document FR2871221 décrit un dispositif d'échange et de transfert thermique comprend un ensemble évaporateur/absorbeur raccordé à un circuit de circulation d'un mélange binaire comportant un premier fluide dit frigorigène et un second fluide dit absorbant. Le fluide frigorigène liquide est évaporé dans une partie évaporateur de l'ensemble puis absorbé dans une partie absorbeur de l'ensemble par le mélange riche en fluide absorbant. L'ensemble évaporateur/absorbeur comprend au moins deux surfaces de référence en vis à vis délimitant deux organes d'évaporateur et d'absorbeur respectivement, des moyens d'approvisionnement du fluide frigorigène liquide à la surface de référence (E) de l'organe d'évaporateur, et des moyens d'approvisionnement du mélange riche en fluide absorbant à la surface de référence (A) de l'organe d'absorbeur.

De tels dispositifs de climatisation doivent encore être améliorés pour être mis en œuvre efficacement dans les véhicules automobiles.

Ainsi, le volume des dispositifs de climatisation à absorption existants reste relativement important, et il est nécessaire de le réduire pour adapter efficacement un tel système dans l'espace réduit d'un véhicule.

Par ailleurs, les ensembles évaporateur/absorbeur utilisés présentent des inconvénients. Ainsi, le passage d'un débit important de fluide dans les plaques poreuses peut engendrer des surpressions locales, entraînant des fuites de fluide à travers les surfaces de transfert de gaz, et donc des dysfonctionnements du système.

Le but de la présente invention est par conséquent de fournir un dispositif de climatisation par absorption adapté aux véhicules automobiles, qui soit perfectionné dans son fonctionnement par rapport aux dispositifs connus de climatisation ou de refroidissement par absorption de l'art antérieur.

En particulier, le but de la présente invention est de fournir un tel dispositif de climatisation par absorption qui permette d'offrir les mêmes performances avec un volume réduit par rapport aux dispositifs de l'art antérieur.

Un autre but de la présente invention est de fournir un tel dispositif de climatisation par absorption, qui soit de conception simple et dont la réalisation nécessite des moyens technologiques peu coûteux.

Ces objectifs, ainsi que d'autres qui apparaîtront plus clairement par la suite, sont atteints par un dispositif de climatisation par absorption, notamment pour véhicule automobile, comprenant un évaporateur présentant au moins une plaque de dispersion parcourue par un fluide réfrigérant, et un absorbeur présentant au moins une plaque de dispersion parcourue par un fluide absorbant, dans lequel, selon l'invention, au moins une des plaques de dispersion est constituée par au moins une grille, et en ce que deux grilles parallèles sont séparées par une distance faible, comprise entre 0 et 2,7 mm avec le reste des caractéristiques techniques de la revendication 1.

La fabrication des plaques de dispersion est ainsi simplifiée, la ou les grilles assurant à la fois la fonction de dispersion des fluides et la fonction de passage des gaz, pour permettre l'évaporation, l'absorption ou la dispersion.

Selon un mode de réalisation d'accord à l'invention, la plaque de dispersion est constituée par un ensemble de deux grilles parallèles.

Le liquide s'écoulant entre les deux grilles est alors maintenu dans la plaque par les forces de capillarité, même si la plaque est inclinée ou soumise à des accélérations ou des vibrations.

Selon un mode de réalisation d'accord à l'invention, la grille constituant la plaque de dispersion parcourue par un fluide absorbant possède les caractéristiques suivantes : la taille de fil est comprise entre 30 et 400 micromètres, la taille de maille possède des longueurs caractéristiques comprises entre 100 et 2700 micromètres, et le matériau est en plastique résistant au fluide absorbant ou en acier résistant au fluide absorbant.

Selon un mode de réalisation préférentiel, la grille constituant la plaque de dispersion parcourue par un fluide réfrigérant possède les caractéristiques suivantes : la taille de fil est comprise entre 30 et 400 micromètres, la taille de maille possède des longueurs caractéristiques comprises entre 100 et 2700 micromètres, et le matériau est en plastique résistant au fluide réfrigérant ou en acier résistant au fluide réfrigérant, dont les dimensions sont adaptées pour laisser un passage suffisant aux bulles de gaz formées lors de l'évaporation du fluide réfrigérant sur la grille ou en amont de celle-ci.

Avantageusement, la plaque de dispersion est maintenue par un cadre.

De façon préférentielle, ce cadre comprend un système de répartition répartissant le fluide entre les grilles parallèles.

Selon un mode de réalisation avantageux, le système de répartition présente une ou plusieurs fentes laissant passer le fluide, la ou les fentes s'étendant le long du bord supérieur de ladite plaque de dispersion.

Selon un autre mode de réalisation avantageux, le système de répartition présente une pluralité de trous laissant passer ledit fluide, lesdits trous étant positionnés le long du bord supérieur de ladite plaque de dispersion.

De façon avantageuse, notamment si les surfaces de grilles sont importantes, le dispositif de climatisation par absorption comporte au moins un élément de renfort s'étendant le long de la surface d'au moins une des grilles.

Ces éléments de renforts permettent notamment de maintenir constant l'écartement entre les grilles, empêchant notamment la grille d'évaporation de gonfler lors du passage du fluide réfrigérant surchauffé.

Selon un mode de réalisation avantageux, au moins une des plaques de dispersion présente une forme ondulée.

Selon un autre mode de réalisation avantageux, au moins une desdites plaques de dispersion présente une forme pliée en accordéon.

Ces plaques de dispersion de forme non plane présentent une plus grande surface dans un volume plus restreint.

La présente invention a également pour objet un véhicule automobile comportant un dispositif de climatisation par absorption tel que décrit ci-dessus.

Cette demande montre un évaporateur destiné à un dispositif de climatisation par absorption, notamment pour véhicule automobile, l'évaporateur présentant au moins une plaque de dispersion parcourue par un fluide réfrigérant, dont la plaque de dispersion est constituée par au moins une grille.

Préférentiellement, la plaque de dispersion de cet évaporateur est constituée par deux grilles parallèles. Cette demande montre un *absorbeur* destiné à un dispositif de climatisation par absorption, notamment pour véhicule automobile, l'évaporateur présentant au moins une plaque de dispersion parcourue par un fluide absorbant, dont la plaque de dispersion est constituée par au moins une grille.

Préférentiellement, la plaque de dispersion de cet absorbeur est constituée par un ensemble de deux grilles parallèles.

Cette demande montre un ensemble évaporateur / absorbeur destiné à un dispositif de climatisation par absorption, notamment pour véhicule, cet ensemble présentant au moins une plaque de dispersion parcourue par un fluide réfrigérant, dite plaque de dispersion d'évaporateur, et au moins une plaque de dispersion parcourue par un fluide absorbant, dite plaque de dispersion d'absorbeur, chacune des plaques de dispersion d'évaporateur, respectivement d'absorbeur, présentant au moins une face placée en regard d'une face d'une plaque de dispersion d'absorbeur, respectivement d'évaporateur, dans lequel au moins une desdites plaques de dispersion est constituée par au moins une grille.

D'autres buts, avantages et caractéristiques de l'invention apparaîtront dans la description qui suit de modes de réalisation préférés, non limitatifs de l'objet et de la portée de la présente demande de brevet, accompagnée de dessins dans lesquels :
- la figure 1 représente, de manière schématique, le principe de fonctionnement d'un dispositif de climatisation par absorption ;
- la figure 2 représente, de manière schématique, le circuit fonctionnel d'un dispositif de climatisation par absorption ;
- la figure 3 est une vue en perspective d'un ensemble évaporateur/absorbeur d'un dispositif de climatisation par absorption selon un mode de réalisation de l'invention ;
- la figure 4 représente un des cadres composant l'ensemble évaporateur/absorbeur de la figure 3 ;
- la figure 5 est une section schématique d'un des cadres composant un ensemble évaporateur/absorbeur, selon un mode de réalisation de l'invention ;
- la figure 6 est une section schématique d'un des cadres composant l'ensemble évaporateur/absorbeur, selon un autre mode de réalisation de l'invention ;
- les figures 7a à 7d sont des vues de détail d'une paroi d'un des cadres composant un ensemble évaporateur/absorbeur, selon quatre modes de réalisation possibles de l'invention ;
- la figure 8 est une vue en coupe partielle d'un des cadres composant un ensemble évaporateur/absorbeur, selon un mode de réalisation de l'invention ;
- les figures 9 et 10 sont deux vues de coupe de la partie inférieure d'un des cadres composant un ensemble évaporateur/absorbeur, selon un mode de réalisation de l'invention, respectivement en vue de coupe longitudinale et en vue de coupe transversale.

Un dispositif de climatisation par absorption met en œuvre un double circuit de fluides, l'un transportant un fluide réfrigérant, par exemple de l'eau, et l'autre un fluide absorbant, par exemple une solution saline de bromure de lithium (LiBr). Ces deux fluides sont miscibles, et une partie des circuits est commune aux deux circuits et transporte un mélange des fluides réfrigérant et absorbant.

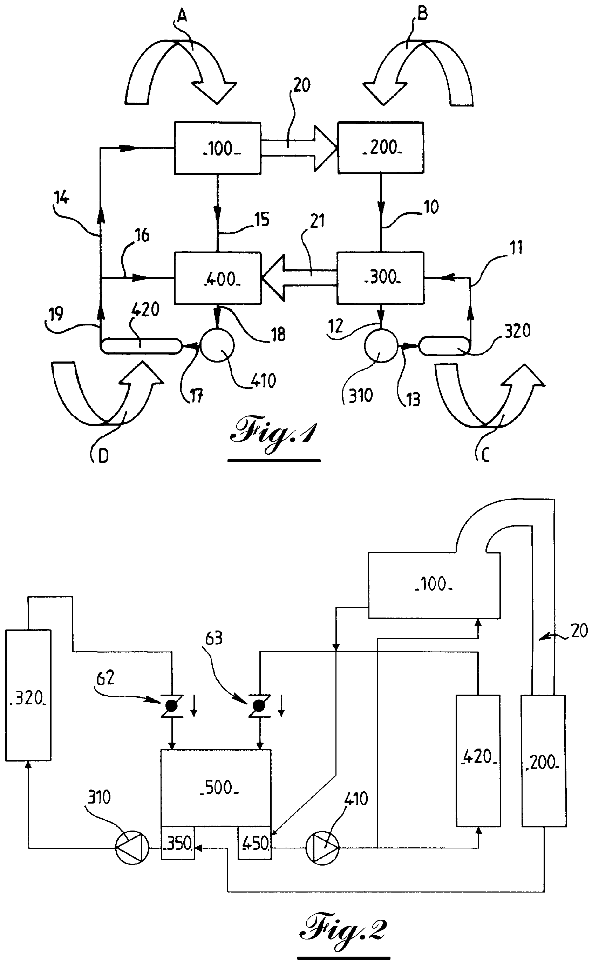

La figure 1 représente, de manière schématique, les éléments constitutifs et le principe de fonctionnement d'un dispositif de climatisation par absorption. Il comprend un élément dans lequel s'effectue la désorption, désigné « désorbeur » 100 dans la suite du texte, un condenseur 200, un évaporateur 300 et un absorbeur 400.

Le désorbeur 100 et l'absorbeur 400 sont remplis d'un mélange d'au moins deux substances miscibles formé par le fluide réfrigérant et le fluide absorbant. Ce mélange est combiné dans l'absorbeur 400, dans lequel le fluide absorbant absorbe le fluide réfrigérant.

Le fluide réfrigérant et le fluide absorbant ont des pressions d'évaporation suffisamment différentes pour que, lorsque le mélange est chauffé dans le désorbeur 100, le fluide réfrigérant, plus volatil, s'évapore, permettant la séparation des deux fluides. La chaleur nécessaire à cette séparation (apport illustré schématiquement par la flèche A) peut avantageusement être apportée au désorbeur par le liquide de refroidissement moteur du véhicule.

Le fluide réfrigérant sous forme de vapeur est alors amené par la canalisation 20 dans le condenseur 200 pour être condensé par l'action de refroidissement de l'air extérieur (apport de refroidissement schématiquement illustré par la flèche B).

Le fluide réfrigérant en phase liquide est ensuite amené par la canalisation 10 vers l'évaporateur 300. Le froid produit lors de l'évaporation de ce fluide réfrigérant est transmis à l'habitacle du véhicule (non représenté), comme schématiquement illustré par la flèche C. A cette fin, il est prévu une pompe 310 et un aérotherme 320, qui sont reliés à l'évaporateur 300 par les canalisations 11, 12 et 13.

La vapeur de fluide réfrigérant qui sort de l'évaporateur 300 est amenée dans l'absorbeur 400 par le conduit 21 qui est formé de fait par l'enveloppe de l'ensemble absorbeur/évaporateur. Le fluide absorbant, qui a été refroidi par de l'air extérieur dans le circuit de solution saline (apport de refroidissement schématiquement illustré par la flèche D), absorbe alors cette vapeur d'eau pour reformer le mélange.

Le circuit de solution saline est formé par une pompe 410 et un radiateur 420, qui sont reliés à l'absorbeur 400 par les canalisations 16, 17, 18 et 19. L'absorbeur 400 est relié au désorbeur 100 par les canalisations 14, 15 et 16.

La figure 2 représente le circuit fonctionnel d'une climatisation par absorption à laquelle peut être appliquée la présente invention. A titre d'exemple non limitatif, il s'agit d'une machine à absorption qui utilise le couple LiBr-eau (Bromure de Lithium comme fluide absorbant et eau comme fluide réfrigérant).

Les éléments du circuit identiques ou similaires à des éléments de la figure 1 sont désignés, le plus souvent, par la même référence numérique. Les références 100 et 200 désignent respectivement le désorbeur et le condenseur du fluide réfrigérant. Les références 320 et 420 désignent respectivement l'aérotherme de fluide réfrigérant et le radiateur du fluide absorbant.

Les références 310 et 410 désignent respectivement la pompe du circuit de fluide réfrigérant et la pompe du circuit de fluide absorbant. Les références 350 et 450 désignent respectivement la réserve de fluide réfrigérant et la réserve de fluide absorbant. Les références 62 et 63 désignent des clapets anti-retour, et la référence 20 désigne la canalisation amenant la vapeur d'eau du désorbeur 100 au condenseur 200.

La référence 500 désigne un ensemble qui combine l'absorbeur et l'évaporateur du dispositif de climatisation par absorption. Dans cet ensemble évaporateur / absorbeur, parcouru par un flux de fluide réfrigérant et un flux de fluide absorbant, une partie du fluide réfrigérant est évaporée, et cette réaction d'évaporation, endothermique, a pour effet de refroidir le flux de fluide réfrigérant restant. La vapeur produite est directement absorbée par le flux de fluide absorbant. Par ailleurs, la chaleur produite par la réaction exothermique d'absorption est évacuée par le flux de fluide absorbant qui circule dans le bloc.

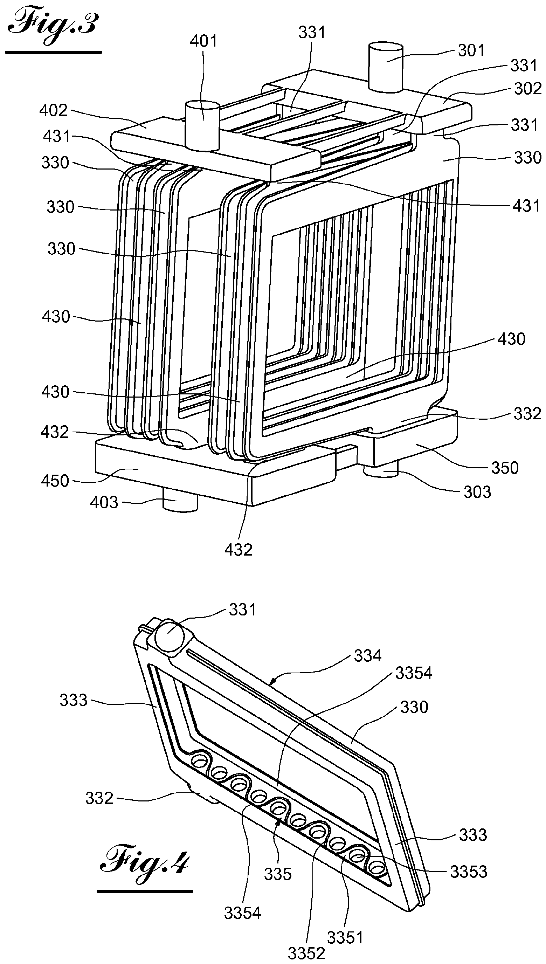

La figure 3 représente une vue en perspective de certains éléments d'un tel ensemble évaporateur / absorbeur, montrant deux circuits distincts, l'un parcouru de fluide réfrigérant et exerçant la fonction d'évaporateur, et l'autre parcouru de fluide absorbant et exerçant la fonction d'absorbeur.

Le circuit parcouru par le fluide réfrigérant comporte un tuyau d'alimentation en fluide réfrigérant 301, alimentant en fluide une boîte de répartition de fluide réfrigérant 302. Cette boîte de répartition 302 permet de répartir le fluide réfrigérant dans une pluralité de cadres d'évaporation 330 s'étendant verticalement et parallèlement les uns des autres, dont l'ouverture d'entrée de fluide 331 est connectée à la boîte de répartition 301.

Dans le cadre d'évaporation 330, le fluide réfrigérant circule, essentiellement par gravité, dans une plaque de dispersion (non représentée sur la figure 3), et une partie du fluide s'évapore. Il est à noter que la quantité de fluide réfrigérant s'évaporant est relativement faible par rapport à la quantité de fluide réfrigérant circulant dans le cadre. A titre d'exemple, le débit de fluide réfrigérant circulant dans les cadres d'évaporation peut être de 1200 litres/heure, et le débit de fluide réfrigérant évaporé de 10 litres/heure.

Le fluide réfrigérant non évaporé, refroidi par la réaction d'évaporation, sort du cadre d'évaporation 330 par son ouverture de sortie de fluide 332, et arrive dans le réservoir de fluide réfrigérant 350. Ce réservoir peut se vider par le tuyau d'évacuation du fluide réfrigérant 303.

Le circuit parcouru par le fluide absorbant est très semblable au circuit parcouru par le fluide réfrigérant. Il comporte ainsi un tuyau d'alimentation en fluide absorbant 401, alimentant en fluide une boîte de répartition de fluide absorbant 402, qui répartit le fluide absorbant dans une pluralité de cadres d'absorption 430 s'étendant verticalement, parallèlement les uns des autres, et parallèlement aux cadres d'évaporation 330 avec lesquels, dans le mode de réalisation représenté, ils sont alternés. L'ouverture d'entrée de fluide 431 de ces cadres d'absorption est connectée à la boîte de répartition 402.

Le fluide absorbant circule, essentiellement par gravité, dans une plaque de dispersion (non représentée sur la figure 3) du cadre d'absorption 430, et absorbe des vapeurs de fluide réfrigérant. Cette réaction d'absorption étant exothermique, elle apporte de la chaleur au fluide absorbant.

Le fluide absorbant sort du cadre d'absorption 430 par son ouverture de sortie de fluide 432, et arrive dans le réservoir de fluide absorbant 450. Ce réservoir peut se vider par le tuyau d'évacuation du fluide absorbant 403.

Dans l'ensemble évaporateur/absorbeur représenté, qui met en œuvre le couple LiBr-eau, le fluide réfrigérant et le fluide absorbant ont des caractéristiques physiques, notamment thermique, très proches. Le circuit parcouru de fluide réfrigérant et le circuit parcouru de fluide absorbant sont donc avantageusement très semblables. Ainsi, les débits de fluide circulant dans les deux circuits sont très semblables.

Dans l'ensemble évaporateur/absorbeur, les cadres d'absorption 430 et les cadres d'évaporation 330 sont alternés. Ainsi, les vapeurs de fluide réfrigérant s'échappant d'un cadre d'évaporation 330 peuvent être immédiatement absorbées par le fluide absorbeur dans un des cadres d'absorption 430 adjacent.

Bien évidemment, l'ensemble évaporateur/absorbeur représenté par la figure 3 est incorporé dans un boîtier étanche (non représenté) évitant les échanges gazeux avec l'extérieur.

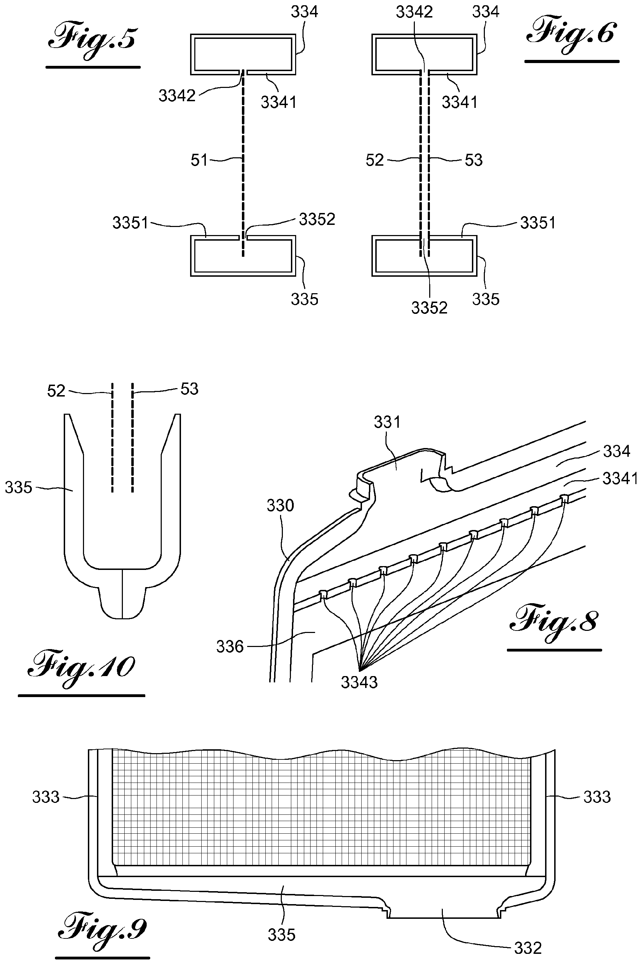

La figure 4 représente un des cadres constituant l'ensemble évaporateur/absorbeur de la figure 3, sans sa plaque de dispersion. Ce cadre est un cadre d'évaporation 330, mais sa structure est identique à celle d'un cadre d'absorption. Les figures 5 et 6 sont deux sections schématiques d'un tel cadre 330, avec leur plaque de dispersion respective.

Le bord supérieur du cadre 330 constitue une boîte de répartition 334, le bord inférieur constitue une gouttière de récupération 335, et les bords latéraux 333 n'ont qu'un rôle de maintien de la plaque de dispersion et du cadre.

Le cadre 330 entoure une plaque de dispersion s'étendant verticalement, permettant la circulation d'un fort débit de fluide d'une façon permettant son évaporation et l'évacuation des gaz d'évaporation produits.

Selon un premier mode de réalisation de l'invention représenté par la figure 5, cette plaque de dispersion est constituée par une grille 51. Le fluide est versé sur la partie haute de la grille par la boîte de répartition 334 et circule vers le bas sous l'effet de la gravité en adhérant à la grille sous l'effet des forces de capillarité, jusqu'à être récupéré dans la gouttière de récupération 335. La grille 51 remplit alors la fonction de dispersion du fluide sur une grande surface et d'évacuation des gaz d'évaporation.

Il est à noter que, dans les cadres d'absorption 430, une plaque de dispersion pouvant être identique permet la circulation d'un fort débit de fluide au contact avec les gaz environnants, de façon à ce que ces gaz puissent être absorbés par le fluide.

La figure 6 représente en vue de coupe simplifiée un second mode de réalisation de l'invention, dans lequel la plaque de dispersion met en œuvre deux grilles 52 et 53 parallèles espacées d'une faible distance, par exemple d'environ un millimètre. Selon ce mode de réalisation, le fluide est versé entre les deux grilles par la boîte de répartition 334. Les forces de capillarité maintiennent le fluide, ou la plus grande partie de celui-ci, entre les deux grilles 52 et 53, et les gaz peuvent circuler à travers les grilles.

Les deux grilles remplissent alors la fonction de dispersion du fluide sur une grande surface et d'évacuation des gaz d'évaporation, ou de mise en contact du fluide avec les gaz environnants.

De plus, les fluides étant maintenus par les forces de capillarité contre les deux grilles, ils permettent un meilleur guidage du flux de fluide le long de la plaque de dispersion et une meilleure dispersion, même quand les grilles sont inclinées ou quand elles subissent une accélération latérale ou des vibrations.

Ainsi, un test a été effectué au cours duquel 100 à 130 1/h d'eau se sont écoulés dans un tel ensemble de deux grilles, incliné de 35° par rapport à l'horizontale, sans que l'eau ne sorte des grilles.

Un tel mode de réalisation peut donc être mis en œuvre dans un véhicule, dans lequel les grilles sont soumises à des accélérations et à des vibrations, sans que les fluides ne s'échappent de la plaque de dispersion ainsi formée.

Il est à noter que, bien que le fluide circule principalement entre les deux grilles, le fait qu'une partie du fluide traverse la grille et s'écoule le long de la surface extérieure de celle-ci est sans incidence sur le fonctionnement du dispositif de climatisation.

D'accord à l'invention, les grilles sont généralement formées de fils entrecroisés formant des mailles. Leurs dimensions sont prévues pour que le fluide se répartisse de façon efficace le long des surfaces. Ainsi, à titre d'exemple non limitatif, le diamètre des fils constituant la grille peut être de 30 à 100 micromètres, la taille des mailles de l'ordre de 100 à 500 micromètres. Le matériau constituant les fils peut être de l'inox, de l'aluminium ou un plastique comme du nylon (par exemple Polyamide 6.6).

La nature du tissage des grilles (épaisseur de fil, forme et taille des mailles, nature du matériau) n'est pas primordiale dans la performance. Cependant, du côté de l'évaporation du réfrigérant, le liquide surchauffé peut créer une ébullition en amont du distributeur ou lors du passage dans la grille. Cette ébullition crée des bulles de vapeurs qui doivent être évacués sans provoquer de projections de liquide. Afin de limiter les projections, il faut que, sous un écoulement de liquide de même nature que le fluide réfrigérant, le tissage laisse passer des bulles de gaz librement, sans les amener dans la gouttière de récupération 335. Cette caractéristique est liée à la nature du matériau de la grille, à l'épaisseur du fil et à la taille de maille. Une géométrie adaptée en bas de grille avec des découpes pour laisser passer les bulles vers l'extérieur peut également être envisagée.

L'espacement des grilles peut dépendre du débit et de la viscosité du fluide devant parcourir la plaque de dispersion, l'objectif étant que le fluide circulant entre les grilles soit en contact avec les deux grilles. Cet espacement peut être par exemple de 0.8 mm.

Il est apparu que la nature de la grille n'a pas d'impact notoire sur les performances de dispersion. De même, si les deux grilles constituant la plaque sont collées l'une à l'autre ou si l'espacement entre elles n'est pas maîtrisé, par exemple si les grilles sont écartées l'une de l'autre par le débit de fluide, les performances de la plaque ne sont pas affectées. Ces performances ne sont pas non plus modifiées si une seule des deux grilles est arrosée.

Le cadre rigide 330 entourant les grilles 52 et 53 assure leur tenue mécanique. Pour améliorer cette tenue mécanique, il est possible d'utiliser des grilles épaisses (présentant un tissage épais ou un fil plus rigide) .

Il est également possible de prévoir des renforts le long des deux grilles 52 et 53 constituant la plaque de dispersion. Ces renforts permettent de maintenir les grilles parallèles l'une par rapport à l'autre sans que le débit de fluide, notamment les gaz du réfrigérant qui s'évapore, n'entraîne un écartement excessif de certaines portions des grilles. Ces renforts peuvent par exemple être constitués par des barres métalliques, liées aux bords supérieur et inférieur du cadre, et s'étendant verticalement le long des grilles, qui peuvent être fixées à ces barres, ou simplement en appui contre celles-ci.

De tels renforts peuvent notamment être utiles sur les cadres d'évaporation, dont les grilles sont arrosées par un fluide surchauffé pouvant générer de la pression et un dégagement de vapeur susceptible d'entraîner un gonflement ou un déplacement excessif de la plaque de dispersion, et pouvant entraîner un déversement du fluide à l'extérieur de celle-ci.

Ces renforts permettent une meilleure tenue mécanique des grilles, pour limiter l'amplitude des vibrations et pour augmenter le niveau de tenue à l'effort sur la durée de vie du système.

Selon un mode de réalisation alternatif, ces renforts peuvent prendre la forme d'une solidarisation locale des deux grilles constituant la plaque de dispersion. Ainsi, un collage sur un insert placé entre les deux plaques, ou un simple point de colle solidarisant les deux grilles 52 et 53 et les maintenant l'une par rapport à l'autre peut remplir ce rôle.

Il est à noter que deux grilles proches l'une de l'autre présentent des performances d'évaporation ou d'absorption proches d'une grille unique. En revanche deux grilles espacées l'une de l'autre d'une distance relativement importante, par exemple de 10 mm, et arrosées chacune par le fluide, présentent des performances doubles par rapport à celles d'une plaque unique, équivalentes aux performances de deux plaques de dispersion comprenant chacune une grille unique.

La performance d'évaporation ou d'absorption de la plaque de dispersion est proportionnelle à sa surface. Pour optimiser cette performance sans augmenter la taille des cadres, il est possible, selon une caractéristique particulière et optionnelle de l'invention, de mettre en œuvre de telles plaques de dispersion de forme non plane.

Les plaques peuvent ainsi présenter un profil ondulé suivant une suite d'arcs de cercle, en forme de S. Pour une plaque formée de deux grilles, ce profil présente l'avantage de maintenir une distance constante entre les deux grilles, et donc de permettre une bonne répartition du flux de fluide.

Le cadre 330 représenté par la figure 4 est adapté pour recevoir une telle plaque de dispersion ondulée. La paroi supérieure de sa gouttière de récupération 335 présente ainsi une fente en forme de S adaptée à recevoir une plaque de dispersion ondulée.

Selon une autre alternative, les plaques de dispersion peuvent également présenter une forme pliée en accordéon, en forme de Z.

Ce dernier profil présente l'avantage d'offrir la plus grande surface de plaque de dispersion possible pour une dimension de cadre donnée. En revanche, pour une plaque formée de deux grilles, ce profil présente l'inconvénient que la distance entre les grilles n'est pas constante au niveau des angles. Des voies de passage préférentiel du fluide peuvent donc apparaître au niveau de ces pointes, ce qui nuit à une bonne dispersion du fluide et donc à une bonne évaporation ou absorption.

Les grilles présentant de tels profils non plans présentent une rigidité nettement supérieure à celles présentant une surface plane.

Des plaques présentant un profil non plan présentent une surface plus importante. En conséquence, pour obtenir une même puissance de refroidissement, il est possible de mettre en œuvre un ensemble évaporateur /absorbeur présentant un nombre de plaques inférieur.

A titre d'exemple, un bloc évaporateur / absorbeur présentant dix plaques de dispersion d'évaporation, ou plaques d'évaporation, et onze plaques de dispersion d'absorption planes, ou plaques d'absorption, peut être remplacé par un bloc présentant deux plaques d'absorption pliées en Z et une plaque d'évaporation pliée en Z. Le gain de volume peut alors être de l'ordre de 25%. De plus, l'utilisation de moins de plaques engendre une moindre complexité des systèmes de distribution et de récupération des fluides.

Il est à noter que, en améliorant les performances des plaques d'évaporation et des plaques d'absorption, on augmente la quantité de vapeur circulant des plaques d'évaporation aux plaques d'absorption. A titre d'exemple, la vapeur circule d'une plaque d'évaporation plane vers une plaque d'absorption plane à la vitesse d'environ 0.3 à 0.6 m/s. Cette vitesse peut être multipliée par 10 dans le cas de surfaces de dispersion en Z. Dans ce cas, des différences de pression, appelées « perte de charge », augmentant avec le carré de la vitesse de déplacement des gaz, apparaissent entre les plaques d'absorption et les plaques d'évaporation. De telles pertes de charge n'ont pas d'influence notable sur les performances du système de climatisation tant qu'elles ne sont pas supérieures à 50Pa.

Les fluides arrivant dans le cadre d'évaporation 330 par l'ouverture d'entrée de fluide 331 s'écoulent dans la boîte de répartition 334, qui s'étend sur toute la largeur de la partie supérieure du cadre 330. Cette boîte de répartition répartit le fluide le long de la plaque de dispersion. Les performances de l'évaporateur, ou de l'absorbeur, nécessitent en effet une bonne dispersion des fluides sur toute la surface des plaques de dispersion.

Suivant la configuration de la plaque de dispersion, la répartition peut se faire selon différents modes de réalisation.

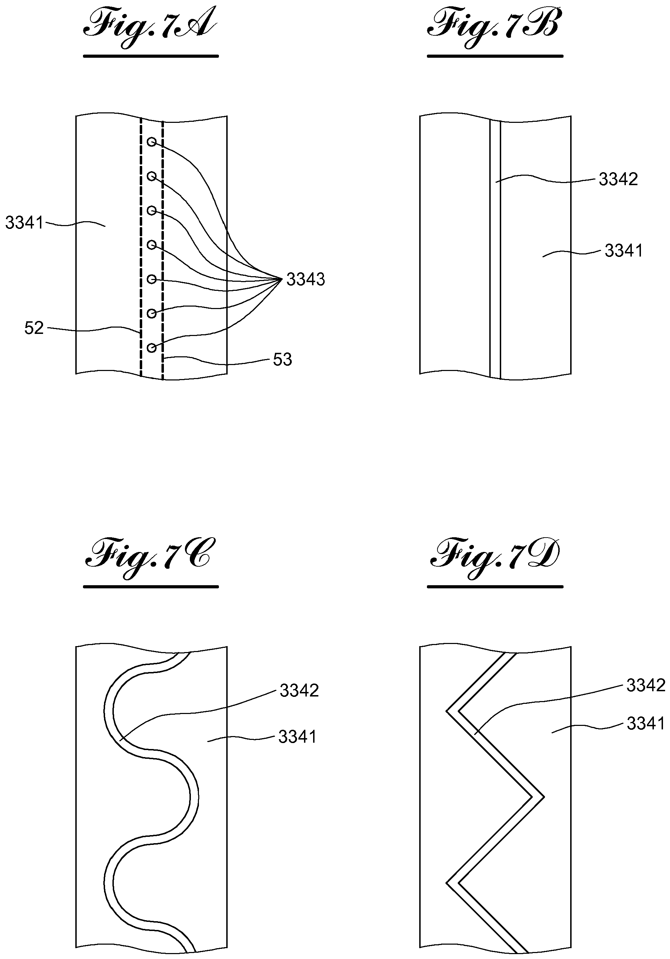

Tel que représenté sur la figure 5, un premier mode de réalisation possible consiste à prévoir une fente 3342 dans la paroi inférieure 3341 de la boîte de répartition 334, s'étendant sur toute la longueur de la plaque de dispersion utilisée. Si nécessaire cette fente peut être discontinue. Les figures 7B à 7D montrent une partie de cette paroi inférieure 3341 de la boîte de répartition 334, respectivement dans le cas de la mise en œuvre du cadre 330 avec une plaque rectiligne, une plaque ondulée en forme de S ou une plaque pliée en forme de Z.

Dans le cas où la plaque de dispersion est constituée de deux grilles parallèles, comme le représente la figure 6, les bords supérieurs des plaques 52 et 53 peuvent avantageusement être collés sur les bords de la fente 3342 de la paroi inférieure 3341 de la boîte de répartition 334. Cette fente 3342 a alors un rôle de maintien des grilles en plus de son rôle de répartition des fluides entre les grilles.

Un autre mode de réalisation possible, illustré par les figures 7A et 8, consiste à prévoir dans la paroi inférieure 3341 de la boîte de répartition 334 une série de trous 3343, situés en regard de la plaque de dispersion. Ainsi, si la plaque de dispersion est constituée par une grille, ces trous peuvent être situés en regard de cette grille. Si au contraire, comme le représente la figure 7A qui montre une partie de la paroi inférieure 3341 de la boîte de répartition 334, la plaque de dispersion est constituée par deux grilles parallèles 52 et 53, les trous 3343 peuvent déboucher entre ces deux grilles.

La figure 8 est une vue en coupe partielle d'une coque formant la moitié d'un cadre d'évaporation 330 prévu pour maintenir une plaque de dispersion constituée de deux grilles. On peut voir sur cette figure l'ouverture d'entrée de fluide 331 et la boîte de répartition 334 dont la paroi inférieure 3341 est percée de trous 3343. Ces trous permettent le passage du fluide entre les deux grilles (non représentées). Il est à noter que l'une de ces grilles peut être collée sur la zone de fixation 336, ce qui permet un bon maintien de cette grille.

Le diamètre de ces trous peut être par exemple de l'ordre de 1 à 2 mm. Ce diamètre doit être plus important, de l'ordre de 2 mm pour les cadres parcourus par une solution saline, dans laquelle il existe un risque de formation de cristaux de sel pouvant boucher des trous trop petits. En revanche, il peut être plus faible, de l'ordre de 1 mm, pour les cadres parcourus par le fluide réfrigérant, de façon à créer une augmentation de la pression, par exemple de l'ordre de 1000 Pa, dans les tuyaux et dans la boîte de répartition. Cette augmentation de la pression permet d'éviter une évaporation parasite du fluide, source d'éclaboussures et de mauvais fonctionnement des pompes.

Après avoir parcouru les plaques de dispersion sous l'effet de la gravité, les fluides sont récupérés dans une gouttière de récupération 335 formant le bord inférieur du cadre 330. Comme le représente la figure 9 montrant le bas d'un cadre 330, cette gouttière est en pente de façon que les fluides récupérés s'écoulent par l'ouverture de sortie de fluide 332.

La figure 10 représente une section de cette gouttière de récupération 335 selon un mode de réalisation de l'invention, ainsi que du bas des grilles 52 et 53 formant la plaque de dispersion. Il est à noter que, dans ce mode de réalisation, la gouttière n'est pas fermée sur la plaque d'écoulement de récupération 335. Ainsi, elle permet de récupérer non seulement les fluides s'écoulant dans les plaques de dispersion, mais également les fluides s'écoulant à la surface extérieure de ces plaques.

Dans les modes de réalisation représentés par les figures 4, 5 et 6, au contraire, la gouttière de récupération 335 présente une paroi supérieure 3351 dans laquelle est ménagée une fente 3352, permettant le passage de la plaque de dispersion. Cette paroi supérieure, comme le montre la figure 4, peut être percée de trous 3353, et entourée de bordures 3354, de façon à permettre la récupération facile de fluides s'étant échappés de la plaque de dispersion.

La surface nécessaire des grilles pour une puissance souhaitée est donnée par une formule empirique. Par exemple, il a été déterminé, pour un couple eau/solution de Li-Br, la relation 1cm²=1.72W (le cm² correspondant à la surface d'un seul coté d'une grille ou d'un ensemble de grilles). La puissance est proportionnelle à la pression dans l'absorbeur.

A titre d'exemple, une grille présentant une largeur de 223 mm et une hauteur de 144 mm présente une surface de 321 cm². Sa performance d'absorption avec un fluide frigorifique (eau) sortant à une température de 8°C et une pression d'équilibre de 10.72 mbar (1072Pa) établie par les conditions de températures et de concentration de la solution absorbante (Li-Br) est d'environ 552W (+/-20%). A 0°C et 6.11 mbar (611 Pa), la performance descendrait à environ 316W(+/-20%).

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

Il est à noter en particulier que les évaporateurs et les absorbeurs étant similaires, l'ensemble des caractéristiques mentionnées pour un évaporateur peut être mis en œuvre pour un absorbeur, et réciproquement.

## Revendications

1. Dispositif de climatisation par absorption notamment pour véhicule automobile, comprenant:
- un évaporateur (300) et un absorbeur présentant chacun au moins une plaque de dispersion parcourue respectivement par un fluide réfrigérant et un fluide absorbant, lesdites plaques de dispersions étant constituées d'au moins une grille (51, 52, 53) et au moins l'une desdites plaques de dispersion étant constituée par deux grilles parallèles (52, 53) séparées par une distance faible comprise entre 0 et 2.7 mm, et la grille constituant la plaque de dispersion parcourue par un fluide absorbant étant constituée de fils entrecroisés formant des mailles, et ladite grille possédant les caractéristiques suivantes : la taille de fil est comprise entre 30 et 400 micromètres, la taille de maille possède des longueurs comprises entre 100 et 2700 micromètres, et son matériau est en plastique résistant au fluide absorbant ou en acier résistant au fluide absorbant.

2. Dispositif de climatisation par absorption selon la revendication 1, **caractérisé en ce que** la grille constituant la plaque de dispersion parcourue par un fluide réfrigérant possède les caractéristiques suivantes : la taille de fil est comprise entre 30 et 400 micromètres, la taille de maille possède des longueurs comprises entre 100 et 2700 micromètres, et son matériau est en plastique résistant au fluide réfrigérant ou en acier résistant au fluide réfrigérant, dont les dimensions sont adaptées pour laisser un passage suffisant aux bulles de gaz formées lors de l'évaporation du fluide réfrigérant sur la grille ou en amont de celle-ci.

3. Dispositif de climatisation par absorption selon l'une quelconque des revendications 1 ou 2, **caractérisé en ce que** ladite plaque de dispersion est maintenue par un cadre (330).

4. Dispositif de climatisation par absorption selon la revendication 3, **caractérisé en ce que** ledit cadre (330) comprend un système de répartition (334) répartissant le fluide entre lesdites grilles parallèles (52, 53).

5. Dispositif de climatisation par absorption selon la revendication 4, **caractérisé en ce que** ledit système de répartition (334) présente une fente (3342) laissant passer ledit fluide, ladite fente (3342) s'étendant le long du bord supérieur de ladite plaque de dispersion.

6. Dispositif de climatisation par absorption selon la revendication 4, **caractérisé en ce que** ledit système de répartition (334) présente une pluralité d'ouvertures (3343) laissant passer ledit fluide, lesdites ouvertures (3343) étant positionnées le long du bord supérieur de ladite plaque de dispersion.

7. Dispositif de climatisation par absorption selon l'une quelconque des revendications 1 à 6, **caractérisé en ce qu'**il comporte au moins un élément de renfort positionné sur ou proche de la surface d'au moins une desdites grilles (51, 52, 53).

8. Dispositif de climatisation par absorption selon l'une quelconque des revendications 1 à 7, **caractérisé en ce qu'**au moins une desdites plaques de dispersion présente une forme ondulée.

9. Dispositif de climatisation par absorption selon l'une quelconque des revendications 1 à 8, **caractérisé en ce qu'**au moins une desdites plaques de dispersion présente une forme pliée en accordéon.

10. Véhicule automobile, **caractérisé en ce qu'**il comporte un dispositif de climatisation par absorption selon l'une quelconque des revendications 1 à 9.

## Patentansprüche

1. Absorptionsklimaanlage, insbesondere für Kraftfahrzeuge, mit:
- einem Verdampfer (300) und einem Absorber, von denen jeder mindestens eine von einem Kühlmittel bzw. einem Absorptionsmittel durchströmte Dispersionsplatte aufweist,
die Dispersionsplatten bestehen aus mindestens einem Gitter (51, 52, 53) und mindestens einer der Dispersionsplatten besteht aus zwei parallelen Gittern (52, 53), die durch einen geringen Abstand zwischen 0 und 2,7 mm voneinander getrennt sind, und das Gitter, das die von einem absorbierenden Fluid durchströmte Dispersionsplatte bildet, besteht aus ineinandergreifenden, maschenbildenden Drähten, wobei das Gitter folgende Merkmale aufweist: Die Drahtgröße liegt zwischen 30 und 400 Mikrometern, die Maschengröße hat Längen zwischen 100 und 2700 Mikrometern, und ihr Material ist aus absorbierendem Fluid beständigem Kunststoff oder aus absorbierendem Fluid beständigem Stahl.

2. Absorptionsklimaanlage nach Anspruch 1, **dadurch gekennzeichnet, dass** das die von einem Kühlmedium durchströmte Verteilerplatte bildende Gitter folgende Merkmale aufweist: die Drahtgröße beträgt 30 bis 400 Mikrometer, die Maschengröße hat Längen von 100 bis 2700 Mikrometer und das Material besteht aus einem kältemittelbeständigen Kunststoff oder einem kältemittelbeständigen Stahl, dessen Abmessungen so ausgelegt sind, dass Gasblasen, die beim Verdampfen des Kältemittels auf oder vor dem Gitter entstehen, ausreichend durchströmt werden.

3. Absorptionsklimaanlage nach einem der Ansprüche 1 oder 2, **dadurch gekennzeichnet, dass** die Verteilerplatte durch einen Rahmen (330) gehalten ist.

4. Absorptionsklimaanlage nach Anspruch 3, **dadurch gekennzeichnet, dass** der Rahmen (330) ein Verteilersystem (334) aufweist, das Fluid zwischen den parallelen Gittern (52, 53) verteilt.

5. Absorptionsklimaanlage nach Anspruch 4, **dadurch gekennzeichnet, dass** das Verteilersystem (334) einen Schlitz (3342) aufweist, der das Fluid durchlässt, wobei sich der Schlitz (3342) entlang der Oberkante der Verteilerplatte erstreckt.

6. Absorptionsklimaanlage nach Anspruch 4, **dadurch gekennzeichnet, dass** das Verteilungssystem (334) eine Vielzahl von Öffnungen (3343) aufweist, die das Fluid durchlassen, wobei die Öffnungen (3343) entlang der oberen Kante der Verteilungsplatte angeordnet sind.

7. Vorrichtung zur Klimatisierung durch Absorption nach einem der Ansprüche 1 bis 6, **dadurch gekennzeichnet, dass** sie mindestens ein Verstärkungselement umfasst, das auf oder nahe der Oberfläche mindestens eines der Gitter (51, 52, 53) angeordnet ist.

8. Absorptionsklimaanlage nach einem der Ansprüche 1 bis 7, **dadurch gekennzeichnet, dass** mindestens eine der Dispersionsplatten eine gewellte Form aufweist.

9. Absorptionsklimaanlage nach einem der Ansprüche 1 bis 8, **dadurch gekennzeichnet, dass** mindestens eine der Dispersionsplatten eine ziehharmonikaartig gefaltete Form aufweist.

10. Kraftfahrzeug, **dadurch gekennzeichnet, dass** es eine Absorptions-Klimaanlage nach einem der Ansprüche 1 bis 9 aufweist.

## Claims

1. Absorption air conditioning device, in particular for a motor vehicle, comprising:
- an evaporator (300) and an absorber each having at least one dispersion plate through which a refrigerant fluid and an absorbent fluid pass, respectively, said dispersion plates being constituted by at least one grid (51, 52, 53) and at least one of said dispersion plates being constituted by two parallel grids (52, 53) separated by a small distance of between 0 and 2.7 mm, and the grid constituting the dispersion plate traversed by an absorbent fluid being constituted by intertwined wires forming meshes, and said grid having the following characteristics: the wire size is between 30 and 400 micrometers, the mesh size has lengths between 100 and 2700 micrometers, and its material is made of absorbent fluid resistant plastic or absorbent fluid resistant steel.

2. Absorption air conditioning device according to claim 1, **characterized in that** the grid constituting the dispersion plate through which a refrigerant fluid passes has the following characteristics: the wire size is between 30 and 400 micrometers, the mesh size has lengths between 100 and 2700 micrometers, and its material is made of refrigerant-resistant plastic or refrigerant-resistant steel, the dimensions of which are adapted to allow sufficient passage to the gas bubbles formed during evaporation of the refrigerant fluid on or upstream of the grid.

3. An absorption air conditioning device according to any one of claims 1 or 2, **characterized in that** said dispersion plate is held by a frame (330).

4. An absorption air conditioning device according to claim 3, **characterized in that** said frame (330) comprises a distribution system (334) distributing fluid between said parallel grids (52, 53).

5. An absorption air conditioning device according to claim 4, **characterized in that** said distribution system (334) has a slot (3342) through which said fluid passes, said slot (3342) extending along the upper edge of said dispersion plate.

6. An absorption air conditioning device according to claim 4, **characterized in that** said distribution system (334) has a plurality of openings (3343) through which said fluid passes, said openings (3343) being positioned along the upper edge of said dispersion plate.

7. An absorption air conditioning device according to any one of claims 1 to 6, **characterized in that** it comprises at least one reinforcing element positioned on or near the surface of at least one of said grids (51, 52, 53).

8. An absorption air conditioning device according to any one of claims 1 to 7, **characterized in that** at least one of said dispersion plates has a corrugated shape.

9. An absorption air conditioning device according to any one of claims 1 to 8, **characterized in that** at least one of said dispersion plates has an accordion-folded shape.

10. Motor vehicle, **characterized in that** it comprises an absorption air conditioning device according to any one of claims 1 to 9.
